(19) Europäisches Patentamt
European Patent Office
Office européen des brevets

(11) **EP 4 047 327 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **22157524.4**

(22) Anmeldetag: **18.02.2022**

(51) Internationale Patentklassifikation (IPC):
*G01F 1/66* (2022.01)     *G01F 1/325* (2022.01)
*G01F 1/32* (2022.01)     *G01N 9/00* (2006.01)
*G01N 11/16* (2006.01)     *G01P 5/02* (2006.01)
*G01P 5/04* (2006.01)     *G01H 1/00* (2006.01)
*G01P 5/08* (2006.01)     *G01P 5/26* (2006.01)

(52) Gemeinsame Patentklassifikation (CPC):
**G01N 9/002; G01F 1/32; G01F 1/3266;
G01F 1/666; G01N 11/16; G01P 5/02; G01P 5/04;
G01P 5/08; G01P 5/26;** G01H 1/00; G01N 2009/006

(54) **MESSGERÄT, SENSOREINHEIT UND VERFAHREN ZUR BESTIMMUNG WENIGSTENS EINES PARAMETERS EINES MEDIUMS**

MEASURING DEVICE, SENSOR UNIT AND METHOD FOR DETERMINING AT LEAST ONE PARAMETER OF A MEDIUM

APPAREIL DE MESURE, UNITÉ DE CAPTEUR ET PROCÉDÉ DE DÉTERMINATION D'AU MOINS UN PARAMÈTRE D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2021 DE 102021104161**

(43) Veröffentlichungstag der Anmeldung:
**24.08.2022 Patentblatt 2022/34**

(73) Patentinhaber: **Krohne AG**
**4019 Basel (CH)**

(72) Erfinder: **van Klooster, Jeroen Martin**
**4005 GN Tiel (NL)**

(74) Vertreter: **Gesthuysen Patentanwälte**
**Partnerschaftsgesellschaft mbB**
**Huyssenallee 68**
**45128 Essen (DE)**

(56) Entgegenhaltungen:
**DE-A1-102015 122 124     US-A1- 2015 114 134**
**US-B2- 8 733 162**

**Beschreibung**

Dokument DE 10 2015 122124 A1 zeigt einen Durchflussmesser.

Die Erfindung wird durch den Gegenstand der unabhängigen Ansprüche definiert. Die abhängigen Ansprüche beziehen sich auf vorteilhafte Ausführungsformen.

Die Erfindung geht aus von einem Messgerät mit einem zur Führung eines Mediums geeigneten Messrohrs, mit wenigstens einer Sensoreinheit, wobei die Sensoreinheit zur Erfassung von wenigstens einem Parameter eines Mediums ausgebildet ist, wobei die Sensoreinheit zumindest teilweise in die Messrohrwand des Messrohrs integriert ist, und mit wenigstens einer Steuer- und Auswerteinheit.

Zudem betrifft die Erfindung eine Sensoreinheit zur Bestimmung wenigstens eines Parameters eines Mediums, zum Einbau in die Messrohrwand eines Messrohres, das von dem Medium durchströmt wird.

Weiterhin betrifft die Erfindung ein Verfahren zur Bestimmung wenigstens eines Parameters eines Mediums mittels eines Messgeräts, wobei das Messgerät ein zur Führung des Mediums geeignetes Messrohr, wenigstens eine Steuer- und Auswerteinheit und wenigstens eine Sensoreinheit aufweist, wobei die Sensoreinheit zur Erfassung des wenigstens einen Parameters des Mediums ausgebildet ist, wobei die Sensoreinheit zumindest teilweise in die Messrohrwand des Messrohrs integriert ist,

Aus dem Stand der Technik sind unterschiedliche Arten der Bestimmung des Durchflusses eines strömenden Mediums sowie der Bestimmung der Dichte und der Viskosität eines Mediums bekannt. Zur Bestimmung einer Mehrzahl von Parametern weisen bekannte Messgeräte häufig auch eine Mehrzahl von Sensoreinheiten auf.

Der vorliegenden Erfindung liegt daher die Aufgabe zugrunde, ein Messgerät anzugeben, wobei mittels einer Sensoreinheit unterschiedliche Parameter eines Mediums bestimmt werden können. Darüber hinaus liegt der Erfindung die Aufgabe zugrunde, eine entsprechende Sensoreinheit sowie ein Verfahren zur Bestimmung einer Mehrzahl von Parametern eines Mediums anzugeben. Gemäß einer ersten Lehre wird die zuvor dargelegte Aufgabe durch ein eingangs beschriebenes Messgerät dadurch gelöst, dass die Sensoreinheit wenigstens einen auslenkbaren Messaufnehmer mit wenigstens einer Kavität und wenigstens eine ortsfeste Basiseinheit aufweist,

wobei der Messaufnehmer über wenigstens ein Federelement mit der Basiseinheit verbunden ist, wobei die Basiseinheit außerhalb des Messrohrinnenraums angeordnet ist,

wobei wenigstens eine Seite des Messaufnehmers im Betrieb Kontakt zum Medium aufweist und wobei die Kavität auf der dem Medium zugewandten Seite des Messaufnehmers angeordnet ist,

und wobei der Messaufnehmer derart in die Messrohrwand integriert ist, dass er zumindest in der Ebene der Messrohrwandung ausgelenkt werden kann,

und dass die Sensoreinheit ein Mittel zur Erfassung der Auslenkung des Messaufnehmers aufweist.

Erfindungsgemäß wurde erkannt, dass ein Messaufnehmer mit einer Kavität zur Aufnahme des zu messenden Mediums durch den Kontakt mit dem Medium wenigstens eine Eigenschaft und/oder einen Zustand ändert. Diese Änderung kann gemessen und aus der Änderung kann wenigstens ein Parameter des Mediums, insbesondere eine Fließgeschwindigkeit, die Dichte und/oder die Viskosität, bestimmt werden. Im Detail ist der Messaufnehmer also derart in das Messrohr integriert, dass das Medium nur auf den Messaufnehmer, nicht aber auf die Basiseinheit wirkt.

Beispielsweise kann ausgenutzt werden, dass ein strömendes Medium in der wenigstens einen Kavität der erfindungsgemäßen Sensoreinheit Wirbel ausbildet, die sich nach Überschreiten der kritischen Größe aus der Kavität ablösen und die Kavität und damit den auslenkbaren Messaufnehmer in Schwingung versetzen. Die Schwingung des Messaufnehmers entspricht der Ablösefrequenz der Wirbel. Aus dieser Schwingung lässt sich im Betrieb daher die Geschwindigkeit des strömenden Mediums bestimmen.

Zudem ändert der Messaufnehmer seine Gesamtmasse, wenn im Betrieb die Kavität mit dem Medium gefüllt ist. Durch den Vergleich der Eigenfrequenz eines schwingenden Messaufnehmers im Referenzzustand und der Eigenfrequenz eines schwingenden Messaufnehmers, wobei die Kavität mit dem Medium gefüllt ist, kann die Dichte des Mediums bestimmt werden.

Weiterhin kann die Dämpfung einer Schwingung mit einmaliger Auslenkung erfasst werden, wobei durch den Vergleich der Dämpfung in einem Referenzzustand und der Dämpfung einer Schwingung im Medium die Viskosität des Mediums bestimmt werden kann.

Gemäß einer ersten Ausgestaltung ist die Sensoreinheit derart in dem Messrohr angeordnet, dass die dem Medium zugewandte Seite des Messaufnehmers im Wesentlichen plan zu der Innenwand des Messrohrs angeordnet ist. Die Kavität des Messaufnehmers ist insofern rückversetzt zur Innenwand des Messrohrs angeordnet. Diese Ausgestaltung weist den Vorteil auf, dass durch die erfindungsgemäße Sensoreinheit keine die Strömung störenden Einbauten in das Messrohr hineinragen.

Vorzugsweise ist der Messaufnehmer derart in die Messrohrwand integriert, dass der Messaufnehmer im Betrieb vollständig von dem Medium umgeben ist. Alternativ kann der Messaufnehmer auch derart in dem Messrohr angeordnet sein, dass nur die dem Medium zugewandte Seite Kontakt mit dem Medium aufweist.

Besonders bevorzugt weist das Messrohr zumindest im Bereich der Sensoreinheit einen rechteckigen Querschnitt auf. Alternativ kann das Messrohr auch einen runden Querschnitt aufweisen.

Eine Abdichtung der Sensoreinheit zum Medium kann beispielsweise über wenigstens einen Dichtungsring und/oder über eine flexible Membran realisiert sein.

Das Mittel zur Erfassung der Auslenkung des Messaufnehmers kann gemäß einer nächsten Ausgestaltung als Piezoelement und/oder als Dehnungsmessstreifen und/oder als induktiver Sensor und/oder als kapazitiver Sensor und/oder als optischer Sensor und/oder als Kraftmesser ausgebildet sein. Dabei kann das Mittel zur Auslenkung im Bereich der Sensoreinheit an dem Messrohr oder auch an der Sensoreinheit selbst insbesondere an dem wenigstens einen Federelement angeordnet sein.

Gemäß einer besonders bevorzugten Ausgestaltung ist das Federelement als Biegefeder, insbesondere als Blattfeder ausgebildet. Ebenfalls bevorzugt ist es, wenn der Messaufnehmer über wenigstens zwei Blattfedern mit der ortsfesten Basiseinheit verbunden ist. Diese Ausgestaltung ist in sich besonders stabil.

Gemäß einer nächsten Ausbildung des erfindungsgemäßen Messgeräts ist ein Mittel zur aktiven Auslenkung des Messaufnehmers vorhanden. Diese Ausgestaltung weist den Vorteil auf, dass nicht nur die Anregung des Messaufnehmers durch das strömende Medium ausgewertet werden kann, sondern dass der Messaufnehmer ebenfalls beispielsweise durch eine einmalige Auslenkung in eine Schwingung in seiner Eigenfrequenz angeregt werden kann. Findet diese Anregung im strömenden Medium statt, so kann aus der Auswertung dieser zusätzlichen Schwingung wenigstens eine weitere Information über das Medium, insbesondere die Dichte und/oder die Viskosität des Mediums bestimmt werden.

Dabei unterscheidet sich die Eigenfrequenz des Messaufnehmers deutlich von der Ablösefrequenz der Wirbel, die sich aufgrund des strömenden Mediums ausbilden.

Insofern weist das Messgerät den Vorteil auf, dass durch die aktive Auslenkung alternativ zu oder in Kombination mit der durch die Strömung angeregte Schwingung besonders flexible unterschiedliche Eigenschaften des Mediums bestimmt werden können.

Das Mittel zur aktiven Anregung der Sensoreinheit ist beispielsweise als Elektromagnet und/oder als Piezoelement ausgebildet.

Gemäß einer nächsten Ausgestaltung ist die Ausdehnung L der Kavität in einer möglichen Strömungsrichtung des Mediums größer als die Tiefe der Kavität. Besonders bevorzugt ist das Verhältnis L/D > 3, insbesondere ist L/D = 4. Diese Ausgestaltung gewährleistet eine ausreichend stabile Erzeugung der Wirbel, die den Messaufnehmer zur Schwingung anregen. Die Form der Kavität ist gemäß einer Ausgestaltung rechteckig, insbesondere quadratisch oder rund, insbesondere elliptisch.

Gemäß einer nächsten Ausgestaltung ist die Masse des Messaufnehmers so gering wie möglich, damit insbesondere die Änderung der Eigenfrequenz des Messaufnehmers bei einer Änderung der Masse durch die Aufnahme des Mediums in der Kavität, besonders gut messbar ist.

Beispielsweise ist der Messaufnehmer zumindest teilweise aus Aluminium oder Titan oder Kunststoff ausgebildet. Zudem können auch an geeigneten Stellen Materialaussparungen vorhanden sein, die die Masse des Messaufnehmers weiter reduzieren.

Gemäß einer nächsten Ausgestaltung ist der auslenkbare Messaufnehmer über ein weiteres Federelement mit einer Masseeinheit verbunden, sodass die Kombination aus dem Messaufnehmer und der Masseeinheit ein gekoppeltes Feder-Masse-System bildet. Im Betrieb kann dieses System im Referenzzustand derart ausgelenkt werden, dass es in Resonanz schwingt. Hierzu weisen vorzugsweise der Messaufnehmer und die Masseeinheit die gleichen Eigenfrequenzen auf. Wird im Betrieb nun eine Masse verändert, beispielsweise dadurch, dass sich die Kavität mit dem zu messenden Medium füllt, so gerät das gekoppelte Feder-Masse-System aus der Resonanz, wobei durch die Differenz der Amplitude der Schwingungen des Messaufnehmers und der Masseeinheit auf die Dichte des Mediums geschlossen werden kann. Diese Ausgestaltung weist den Vorteil auf, dass die Messung der Dichte des Mediums besonders sensitiv ist.

Gemäß einer nächsten Ausgestaltung weist das Messgerät wenigstens zwei Sensoreinheiten auf, die in die Messrohrwand integriert sind. Beispielsweise können die wenigstens zwei Sensoreinheit auf einander gegenüberliegenden Seiten der Messrohrwand angeordnet sein. Die wenigstens zwei Sensoreinheiten können die gleiche Form der Kavität aufweisen, besonders bevorzugt ist es jedoch, wenn die Kavitäten eine unterschiedliche Form und/oder eine unterschiedliche Größe aufweisen.

Die dargelegten Ausgestaltungen des Messgeräts weisen insgesamt den Vorteil auf, dass mittels des Messgeräts besonders flexibel der Durchfluss und/oder die Dichte und/oder die Viskosität eines strömenden Mediums bestimmt werden kann.

Gemäß einer nächsten Ausgestaltung kann die Sensoreinheit miniaturisiert ausgebildet sein und mittels eines Verfahrens der Mikrosystemtechnik hergestellt sein.

Gemäß einer zweiten Lehre der vorliegenden Erfindung wird die eingangs dargelegte Aufgabe durch eine eingangs beschriebene Sensoreinheit dadurch gelöst, dass die Sensoreinheit wenigstens einen auslenkbaren Messaufnehmer mit wenigstens einer Kavität und wenigstens eine fixierbare Basiseinheit, die im montierten Zustand ortsfest angeordnet ist, aufweist,

wobei der Messaufnehmer über wenigstens ein Federelement mit der Basiseinheit verbunden ist,

wobei wenigstens eine Seite des Messaufnehmers im Betrieb Kontakt zum Medium aufweist und wobei die Kavität auf der dem Medium zugewandten Seite des Messaufnehmers angeordnet ist,

und dass die Sensoreinheit ein Mittel zur Erfassung der Auslenkung des Messaufnehmers aufweist.

Besonders bevorzugt ist die Sensoreinheit gemäß einer der oben beschriebenen Ausgestaltungen ausgebildet.

Gemäß einer dritten Lehre der vorliegenden Erfindung wird die eingangs dargelegte Aufgabe durch ein eingangs beschriebenes Verfahren zur Bestimmung wenigstens eines Parameters eines fließenden Mediums dadurch gelöst, dass die Sensoreinheit wenigstens einen auslenkbaren Messaufnehmer mit wenigstens einer Kavität und wenigstens eine ortsfeste Basiseinheit aufweist,

wobei der Messaufnehmer über wenigstens ein Federelement mit der Basiseinheit verbunden ist, wobei die Basiseinheit außerhalb des Messrohrinnenraums angeordnet ist,

wobei wenigstens eine Seite des Messaufnehmers Kontakt zum Medium aufweist und wobei die Kavität auf der dem Medium zugewandten Seite des Messaufnehmers angeordnet ist, wobei der Messaufnehmer derart in die Messrohrwand integriert ist, dass er zumindest in der Ebene der Messrohrwandung ausgelenkt werden kann,

dass die Sensoreinheit ein Mittel zur Erfassung der Auslenkung des Messaufnehmers aufweist,

und dass das Verfahren die folgenden Schritte umfasst:

- Anregung des Messaufnehmers zur Schwingung in der Ebene der Messrohrwandung,

- Erfassung der Frequenz und/oder der Amplitude der Schwingung durch das Mittel zur Erfassung der Auslenkung,

- Bestimmung des wenigstens einen Parameters aus der gemessenen Frequenz und/oder der Amplitude durch die Steuer- und Auswerteeinheit.

Gemäß einer ersten Ausgestaltung des Verfahrens erfolgt die Anregung des Messaufnehmers zur Schwingung durch das strömende Medium, wobei aus der Frequenz der Schwingung des Messaufnehmers die Strömungsgeschwindigkeit des Mediums bestimmt wird.

Im Detail bilden sich in der Kavität Wirbel, die sich bei Überschreiten einer kritischen Größe aus der Kavität ablösen. Durch die Ausbildung der Wirbel und durch das Ablösen aus der Kavität wird der Messaufnehmer zur Schwingung angeregt.

Für die Ablösefrequenz gilt folgender Zusammenhang:

$$St = \frac{f \cdot D}{U},$$

mit $St$ = Strouhal Zahl, $f$ = Ablösefrequenz [Hz], $U$ = Strömungsgeschwindigkeit [m/s] und $D$ = charakteristische Größe der Kavität, bspw. Länge oder Tiefe [m].

Die Strouhal Zahl kann im Wesentlichen als konstant über einen großen Bereich Reynoldszahlen angenommen werden. Die Ablösefrequenz entspricht der zu messenden Schwingungsfrequenz des Messaufnehmers.

Gemäß einer nächsten Ausgestaltung ist ein Mittel zur aktiven Auslenkung des Messaufnehmers vorhanden, wobei alternativ oder zusätzlich zu der Anregung durch das strömende Medium die Anregung des Messaufnehmers durch das Mittel zur aktiven Auslenkung erfolgt.

Beispielsweise wird der Messaufnehmer durch das zuvor genannte Mittel einmalig ausgelenkt und so zur Schwingung in der Eigenfrequenz angeregt.

Gemäß einer nächsten Ausgestaltung kann aus der Frequenz der Eigenschwingung des Messaufnehmers die Dichte des Mediums bestimmt werden. Hierzu ist in der Steuer- und Auswerteeinheit wenigstens ein Wert für die Eigenfrequenz unter Referenzbedingungen, beispielsweise für die Eigenschwingung in Luft und/oder in einem bekannten Referenzmedium hinterlegt. Ändert sich der Wert Eigenfrequenz, weil die Kavität mit dem Medium gefüllt ist, sodass der Messaufnehmer eine andere Masse aufweist, kann aus der Änderung der Eigenfrequenz die Dichte des Mediums bestimmt werden.

Die ungedämpfte Eigenfrequenz eines eindimensionalen Masse-Feder-Systems, wobei die Kombination aus dem Messaufnehmer, dem Federelement und der ortsfesten Basiseinheit einem solchen System entspricht, weist folgenden Zusammenhang auf:

$$f_n = \frac{1}{2\pi} \cdot \sqrt{\frac{k}{m}},$$

wobei $k$ die Federkonstante des Federelementes und $m$ die Masse des Messaufnehmers ist. Eine Änderung der Masse des Messaufnehmers bewirkt insofern eine Änderung der Eigenfrequenz des oben genannten Schwingungssystems.

Alternativ oder zusätzlich kann aus der Dämpfung der Schwingung des Messaufnehmers die Viskosität des Mediums bestimmt werden.

Die gedämpfte Eigenschwingung eines frei schwingenden Feder-Masse-Systems lässt sich folgendermaßen beschreiben:

$$f_0 = f_n \cdot \sqrt{1 - \xi^2} \, ,$$

wobei $f_0$ die gedämpfte Schwingungsfrequenz und $\xi$ der Dämpfungskoeffizient ist. Der Dämpfungskoeffizient $\xi$ kann durch die zeitliche Änderung der Schwingungsamplitude bestimmt werden.

Ist der auslenkbare Messaufnehmer über ein weiteres Federelement mit einer Masseeinheit verbunden, sodass die Kombination aus dem Messaufnehmer und der Masseeinheit ein gekoppeltes Feder-Masse-System bildet, und wird das gekoppelte Feder-Masse-System zur Schwingung angeregt, wobei die Änderungen der Masse des Messaufnehmers durch die Aufnahme des Mediums eine Störung der Resonanz bewirkt, so kann aus der Amplitude der Differenz zwischen der Schwingung des Messaufnehmers und der Schwingung der Masseeinheit die Dichte des strömenden Mediums bestimmt werden. Die Bestimmung der Dichte über das zuvor genannte gekoppelte Feder-Masse-System weist eine besonders hohe Empfindlichkeit auf, sodass die Messungen der Dichte auf diese Weise besonders genau erfolgen kann.

Es gibt nun eine Vielzahl von Möglichkeiten, das erfindungsgemäße Messgerät, die erfindungsgemäße Sensoreinheit sowie das erfindungsgemäße Verfahren auszugestalten und weiterzubilden. Hierzu wird verwiesen auf die den unabhängigen Patentansprüchen nachgeordneten Patentansprüche sowie auf die nachfolgende Beschreibung von bevorzugten Ausführungsbeispielen in Verbindung mit der Zeichnung. In der Zeichnung zeigen:

Fig. 1          ein erstes Ausführungsbeispiel eines erfindungsgemäßen Messgeräts,

Fig. 2          die erfindungsgemäße Sensoreinheit im eingebauten Zustand in vergrößerter Ansicht,

Fig. 3          ein weiteres Ausführungsbeispiel einer erfindungsgemäßen Sensoreinheit,

Fig. 4          ein weiteres Ausführungsbeispiel eines erfindungsgemäßen Messgeräts,

Fig. 5a-5c      die aktive Auslenkung eines Messaufnehmers,

Fig. 6          eine graphische Darstellung des Verhaltens der erfindungsgemäßen Sensoreinheit im Betrieb,

Fig. 7          eine graphische Darstellung des Abklingens des Messaufnehmers nach einer aktiven Auslenkung,

Fig. 8          eine weitere Ausgestaltung einer erfindungsgemäßen Sensoreinheit,

Fig. 9          eine weitere Ausgestaltung einer erfindungsgemäßen Sensoreinheit

Fig. 10         eine weitere Ausgestaltung einer erfindungsgemäßen Sensoreinheit und

Fig. 11         ein erstes Ausführungsbeispiel eines erfindungsgemäßen Verfahrens

Fig. 12         ein weiteres Ausführungsbeispiel eines erfindungsgemäßen Verfahrens,

Fig. 13         ein weiteres Ausführungsbeispiel eines erfindungsgemäßen Verfahrens und

Fig. 14         ein weiteres Ausführungsbeispiel eines erfindungsgemäßen Verfahrens.

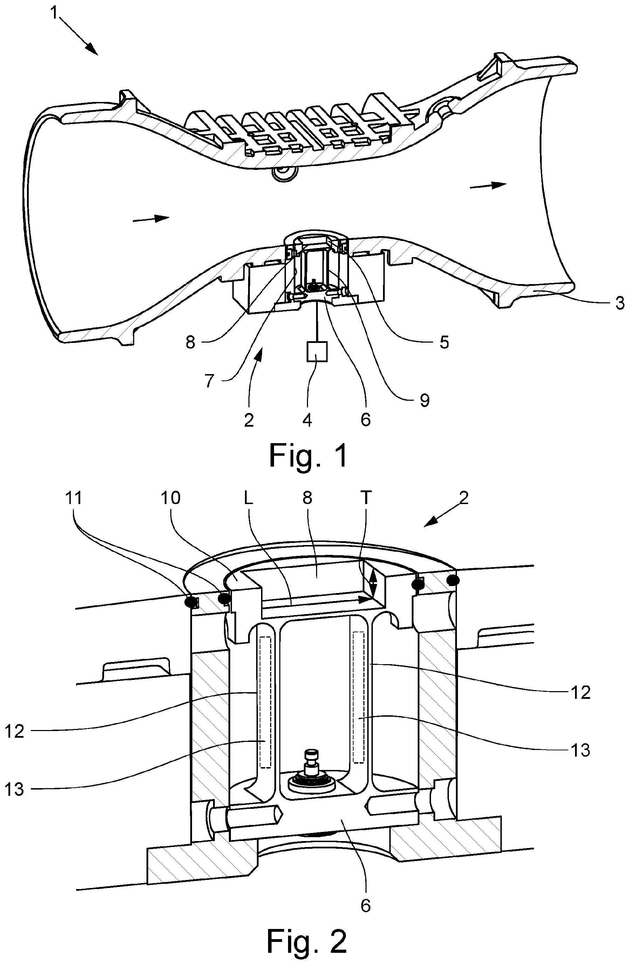

Fig. 1 zeigt ein erstes Ausführungsbeispiel eines erfindungsgemäßen Messgeräts 1 mit einer Sensoreinheit 2, wobei die Sensoreinheit 2 zur Erfassung der Strömungsgeschwindigkeit und/oder der Dichte und/oder der Viskosität eines strömenden Mediums ausgebildet ist. Das Messgerät 1 weist weiterhin ein Messrohr 3 und eine Steuer- und Auswerteeinheit 4 auf. Die Sensoreinheit 2 ist in die Messrohrwand derart integriert, dass sie zumindest teilweise im Betrieb Kontakt mit dem durch das Messrohr 3 strömenden Medium aufweist.

Die Sensoreinheit 2 umfasst einen auslenkbaren Messaufnehmer 5 und eine ortsfeste Basiseinheit 6, wobei der Messaufnehmer 5 über ein Federelement 7 mit der Basiseinheit 6 verbunden ist. Der Messaufnehmer 5 ist derart angeordnet, dass er im Betrieb zumindest teilweise Kontakt zum Medium aufweist. Zudem weist der Messaufnehmer 5 mediumseitig eine Kavität 8 auf, wobei die Kavität 8 im Betrieb das strömende Medium aufnimmt. Zudem ist der Messaufnehmer 5 derart angeordnet, dass er im Betrieb in und entgegen der Strömungsrichtung des strömenden Mediums ausgelenkt werden kann. Weiterhin weist die Sensoreinheit 2 ein Mittel 9 zur Erfassung der Auslenkung des Messaufnehmers 5 auf.

Dargestellt ist insofern ein Messgerät 1 einer Sensoreinheit 2, wobei mittels der Analyse der Auslenkung durch das strömende Medium und/oder mittels der Analyse von Änderungen der Schwingungseigenschaften des Messaufnehmers 5 durch das strömende Medium die Strömungsgeschwindigkeit und/oder die Dichte und/oder die Viskosität des Mediums bestimmt werden kann. Mittels des dargestellten Messgeräts 1 können somit in vorteilhafterweise unterschiedliche Parameter des Mediums bestimmt werden.

Fig. 2 zeigt die in Fig. 1 dargestellte Sensoreinheit 2 in vergrößerter Ansicht. Dargestellt ist, dass der Messaufnehmer 5 derart in die Messrohrwand integriert ist, dass die mediumseitige Oberfläche 10 des Messaufnehmers 5 im Wesentlichen plan mit der Messrohrinnenwand angeordnet ist. Zudem weist die in dem Messaufnehmer 5 angeordnete Kavität 8 eine rechteckige Grundform auf, wobei das Verhältnis Länge der Kavität L zu Tiefe der Kavität T größer 3 ist. Gemäß weiteren Ausgestaltungen sind andere Geometrien der Kavität 8 ebenfalls denkbar. Der Messaufnehmer 5 ist über Dichtungsringe 11 mit der Messrohrinnenwand verbunden. Zudem ist der Messaufnehmer 5 über zwei Blattfedern 12 an der ortsfesten Basiseinheit 6 angeordnet. An den Blattfedern sind jeweils Dehnungsmessstreifen 13 angebracht, durch die die Auslenkung bzw. die Schwingung des Messaufnehmers 5 erfasst werden kann.

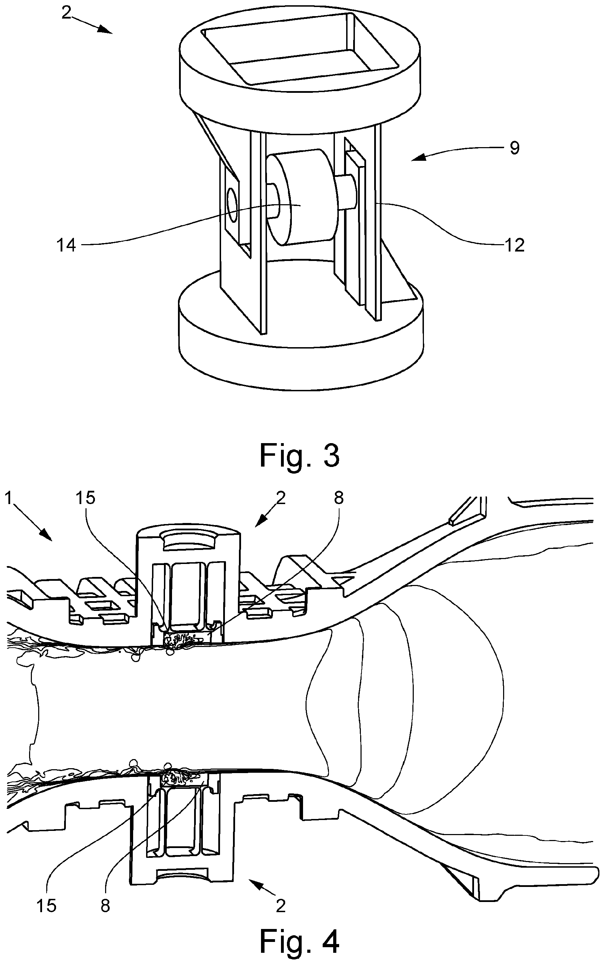

Fig. 3 zeigt ein weiteres Ausführungsbeispiel einer erfindungsgemäßen Sensoreinheit, wobei das Mittel 9 zur Erfassung der Auslenkung des Messaufnehmers 5 nicht als Dehnungsmessstreifen 13 sondern als Kraftmesser 14 der zwischen den Blattfedern 12 angeordnet ist, ausgebildet ist.

Fig. 4 zeigt ein weiteres Ausführungsbeispiel eines erfindungsgemäßen Messgeräts 1, wobei das Messgerät 1 zwei erfindungsgemäße Sensoreinheiten 2 aufweist, die einander gegenüberliegend in die jeweilige Messrohrwand integriert sind. Im dargestellten Ausführungsbeispiel weisen die Kavitäten 8 der Sensoreinheiten 2 die gleiche Form auf. Gemäß einem anderen Ausführungsbeispiel ist es ebenso denkbar, dass die Kavitäten 8 eine unterschiedliche Form und/oder Größe aufweisen.

Dargestellt ist ebenfalls das durch das Messrohr 3 strömende Medium, wobei das Medium jeweils in den Kavitäten 8 Wirbel 15 ausbildet, die sich nach Überschreiten eines kritischen Grenzwertes von dem Messaufnehmer 5 ablösen und den Messaufnehmer 5 damit zur Schwingung anregen. Dieser Effekt kann im Betrieb zur Bestimmung der Strömungsgeschwindigkeit des Mediums genutzt werden.

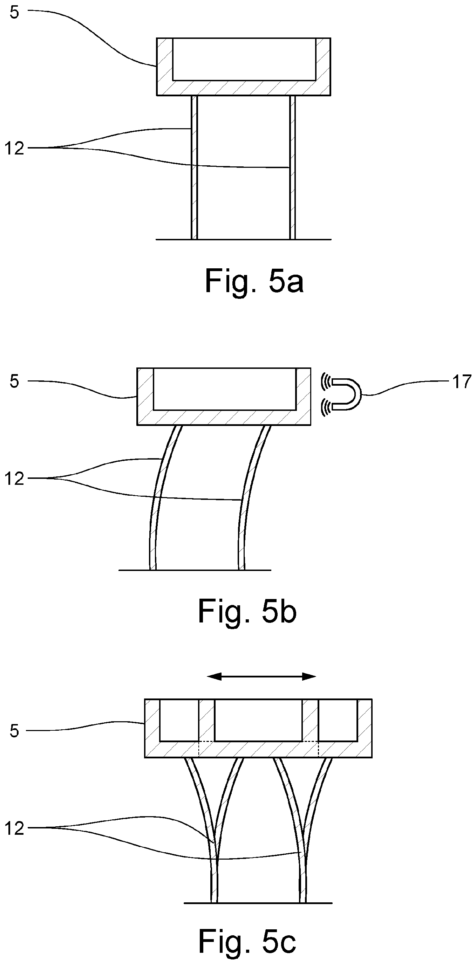

Neben der Auslenkung des Messaufnehmers 5 durch das strömende Medium oder alternativ dazu kann der Messaufnehmer 5 auch aktiv ausgelenkt und in Schwingung seiner Eigenfrequenz angeregt werden, wobei zur Messung der Dichte und/oder der Viskosität die Änderung der freien Schwingung im Medium zu der Schwingung im Referenzzustand erfasst und ausgewertet wird. Beispielsweise kann der Messaufnehmer 5 durch ein Mittel zur aktiven Auslenkung 16, das im Folgenden Ausführungsbeispiel als Elektromagnet 17 ausgebildet ist, ausgelenkt werden. Dies ist in den Fig. 5a bis 5c dargestellt.

Fig. 5a zeigt den Zustand des Messaufnehmers 5 im nicht ausgelenkten Zustand. Fig. 5b zeigt den Zustand, in dem ein Elektromagnet 17 den Messaufnehmer auslenkt und Fig. 5c zeigt den Zustand, in dem der Messaufnehmer 5 in seiner Eigenfrequenz schwingt.

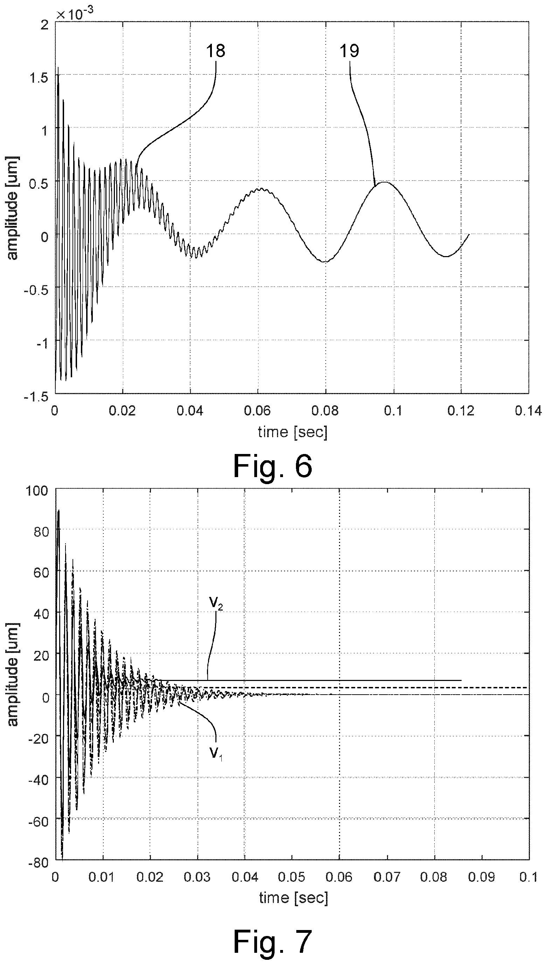

Fig. 6 zeigt in grafischer Darstellung das Verhalten des Messaufnehmers 5 im Betrieb, wenn er wie oben beschrieben, in Wechselwirkung mit dem strömenden Medium zur Schwingung angeregt und zusätzlich aktiv zur Schwingung in seiner Eigenfrequenz angeregt wird. Die Darstellung zeigt, dass die Eigenfrequenz 18 des Messaufnehmers 5 sehr viel höher ist als die Frequenz 19 der Schwingung, die durch das Ablösen der Wirbel des strömenden Mediums erzeugt wird. In vorteilhafter Weise lassen sich diese Schwingungen daher getrennt auswerten. Insofern kann mit einer erfindungsgemäßen Sensoreinheit 2 sowohl die Strömungsgeschwindigkeit als auch die Dichte des Mediums als auch die Viskosität des Mediums bestimmt werden.

Fig. 7 zeigt eine graphische Darstellung des Abklingens des Messaufnehmers 5 nach einer aktiven Auslenkung für Medien unterschiedlicher Dichte bzw. unterschiedlicher Viskosität. Die Darstellung zeigt, dass der Messaufnehmer in Medien mit einer niedrigen Viskosität $V_1$ länger schwingt als in Medien mit einer höheren Viskosität $V_2$. Zudem zeigt die Abbildung, dass der Messaufnehmer einen Offset der Auslenkung aufweist, der unter anderem abhängig von der Viskosität bzw. der Dichte des Mediums ist.

Für den Offset der Auslenkung gilt der folgende Zusammenhang:

$$\overline{F}_D = C_D \cdot \frac{1}{2} \cdot \rho \cdot U^2 \cdot A \,,$$

wobei $F_D$ der gemessene Auslenkungskraft entspricht, $\rho$ der Dichte, $U$ der Strömungsgeschwindigkeit, A der Kontaktfläche und $C_D$ dem viskositätsabhängigen Auslenkungskoeffizient. Insofern kann auch die Erfassung des Auslenkungsoffsets zur Bestimmung der Dichte und/oder der Viskosität des Mediums genutzt werden.

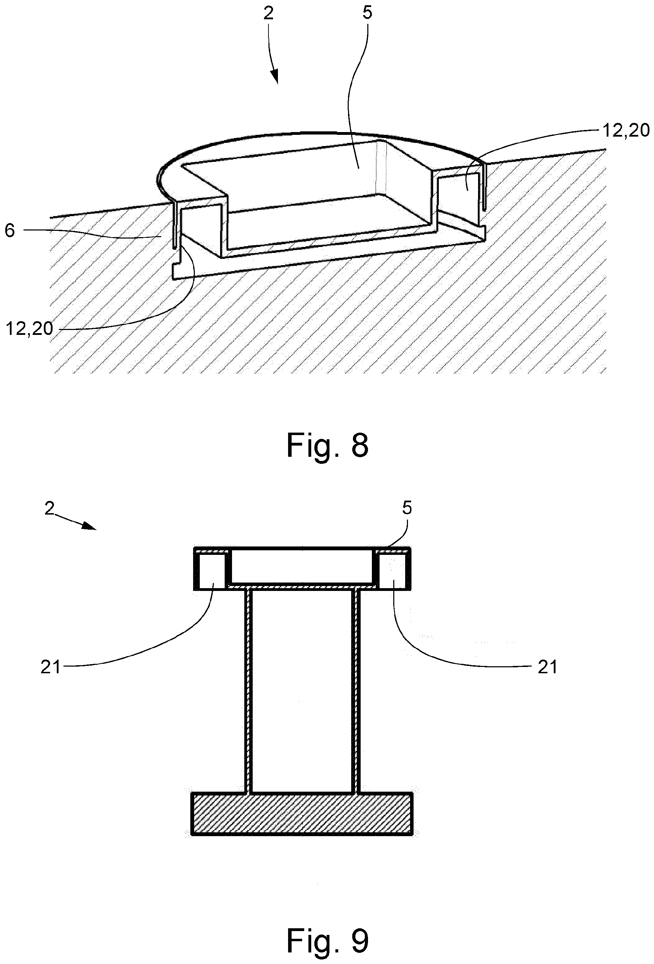

Fig. 8 zeigt ein weiteres Ausführungsbeispiel einer Sensoreinheit 2, wobei der Messaufnehmer 5 über eine Membran 20 oder über Blattfeder 12 unmittelbar mit der Messrohrwand verbunden ist, sodass die ortsfeste Basiseinheit 6 durch die Messrohrwand selbst gebildet wird.

Grundsätzlich ist es besonders vorteilhaft, wenn die Masse des Messaufnehmers 5 möglichst gering ist, damit der Messeffekt maximal ist. In Fig. 9 ist daher ein Ausführungsbeispiel einer Sensoreinheit 2 dargestellt, wobei der Messaufnehmer 5 Materialaussparungen 21 zur Reduzierung der Masse aufweist.

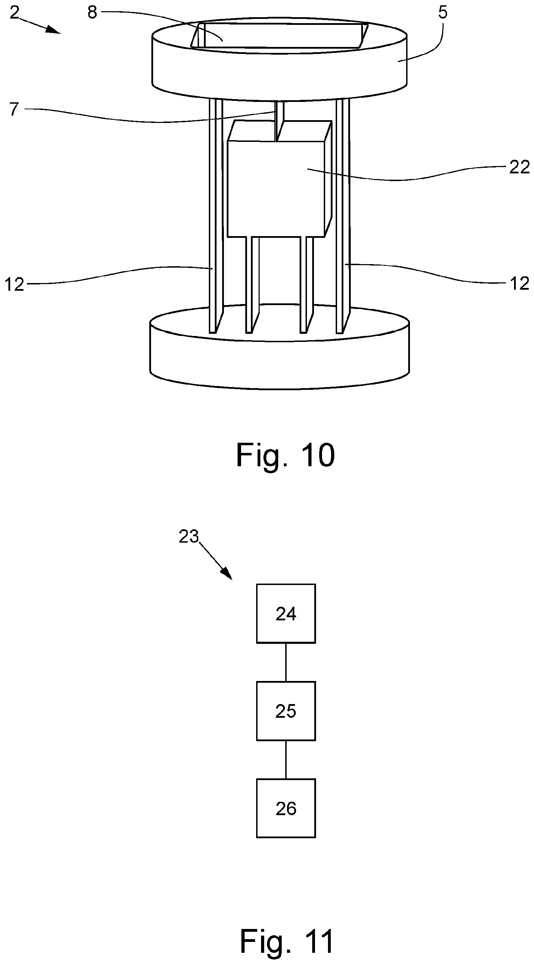

In Fig 10 ist ein weiteres Ausführungsbeispiel einer erfindungsgemäßen Sensoreinheit 2 dargestellt, wobei eine weitere Masseeinheit 22 vorhanden ist, die über ein weiteres Federelement 7 mit dem Messaufnehmer 5 verbunden ist, sodass die Kombination aus dem Messaufnehmer 5 und der Masseeinheit 22 ein zweifach gekoppeltes Masse-Feder-System bildet. Dabei weisen der Messaufnehmer 5 und die zusätzliche Masseeinheit 22 gleiche Eigenfrequenzen auf. Im Referenzzustand schwingt dieses System nach Anregung daher harmonisch in der gemeinsamen Eigenfrequenz.

Ändert sich die Masse des Messaufnehmers 5, beispielsweise dadurch dass sich Medium in der Kavität 8 befindet, so gerät das System aus der Resonanz, was beispielsweise durch Erfassung der Amplitudendifferenz zwischen den Schwingungen der Masseeinheit 22 und des Messaufnehmers 5 erfasst werden kann. Diese Ausgestaltung ist besonders sensitiv im Hinblick auf die Messung der Dichte des Mediums, da bereits kleine Masseänderungen des Messaufnehmers 5 besonders leicht nachweisbar sind.

Fig. 11 zeigt ein erstes Ausführungsbeispiel eines erfindungsgemäßen Verfahrens 23 zur Bestimmung wenigstens eines Parameters eines fließenden Mediums mittels eines in Fig. 1 dargestellten Messgeräts 1. Das Verfahren 23 weist die folgenden Schritte auf:
In einem ersten Schritt 24 wird der Messaufnehmer 5 zur Schwingung in und entgegen der Strömungsrichtung des strömenden Mediums angeregt. Durch das Mittel 9 zur Erfassung der Auslenkung wird die Frequenz und/oder die Amplitude der Schwingung des Messaufnehmers 5 erfasst 25. Aus der gemessenen Frequenz und/oder der Amplitude wird anschließend der wenigstens eine Parameter durch die Steuer- und Auswerteeinheit 4 bestimmt 26.

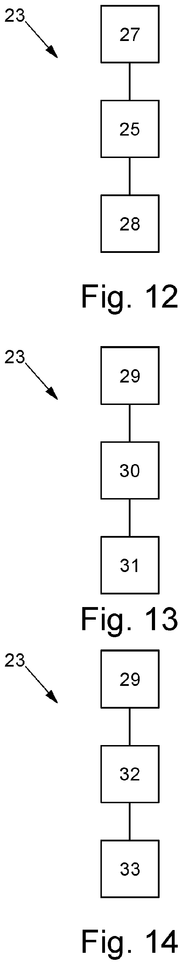

Gemäß dem in Fig. 12 dargestellten Ausführungsbeispiel des Verfahrens 23 wird der Messaufnehmer 5 durch das strömende Medium ausgelenkt und zur Schwingung angeregt 27.

Anschließend wird die Frequenz der Schwingung des Messaufnehmers 5 erfasst 25.

Mittels des Zusammenhangs

$$St = \frac{f \cdot D}{U} \, ,$$

mit *St* = Strouhal Zahl, *f* = Ablösefrequenz [Hz], *U* = Strömungsgeschwindigkeit [m/s] und *D* = charakteristische Größe der Kavität, bspw. Länge oder Tiefe [m], wobei die Ablösefrequenz der Schwingungsfrequenz des Messaufnehmers entspricht, lässt sich in einem nächsten Schritt die Strömungsgeschwindigkeit des Mediums bestimmen 28.

Gemäß einer nächsten, in Fig. 13 dargestellten Ausgestaltung des Verfahrens 23 wird der Messaufnehmer 5 in einem ersten Schritt 29 aktiv ausgelenkt und zur Schwingung in seiner Eigenfrequenz angeregt. Anschließend wird die Frequenz der Eigenschwingung erfasst und mit einem hinterlegten Wert, der der Eigenfrequenz im Referenzzustand entspricht, verglichen 30.

Aus dem Vergleich wird in einem nächsten Schritt die Dichte des Mediums bestimmt 31, wobei bei der Bestimmung der Dichte des Mediums ebenso zu berücksichtigen ist, dass sich der Wert der Eigenfrequenz gleichzeitig aufgrund der Abweichung der Viskosität des Mediums zum Referenzzustand ändert.

Gemäß dem in Fig. 14 dargestellten Verfahren wird nach der aktiven Anregung 29 die zeitliche Änderung der Amplitude der Eigenfrequenz und insofern die Dämpfung der Schwingung erfasst 32. Aus der Dämpfung kann anschließend die Viskosität des Mediums bestimmt werden 33.

Die in den Figuren 12 bis 14 dargestellten Ausführungsbeispiele können entweder einzeln oder auch in sämtlichen Kombinationen realisiert werden.

Damit weisen die dargestellten Ausführungsbeispiele den Vorteil, dass mittels des erfindungsgemäßen Messgeräts eine besonders flexible Bestimmung unterschiedlicher Eigenschaften eines strömenden Mediums möglich ist.

**Bezugszeichen**

| | |
|---|---|
| 1 | Messgerät |
| 2 | Sensoreinheit |
| 3 | Messrohr |
| 4 | Steuer- und Auswerteeinheit |
| 5 | Messaufnehmer |
| 6 | Basiseinheit |
| 7 | Federelement |
| 8 | Kavität |
| 9 | Mittel zur Erfassung der Auslenkung |
| 10 | mediumseitige Oberfläche des Messaufnehmers |
| 11 | Dichtungsring |
| 12 | Blattfeder |
| 13 | Dehnungsmessstreifen |
| 14 | Kraftmesser |
| 15 | Wirbel |
| 16 | Mittel zur aktiven Auslenkung |
| 17 | Elektromagnet |
| 18 | Eigenfrequenz des Messaufnehmers |
| 19 | Schwingungsfrequenz |
| 20 | Membran |
| 21 | Materialaussparung |
| 22 | Masseeinheit |
| 23 | Verfahren zur Bestimmung eines Parameter |
| 24 | Auslenkung des Messaufnehmers |
| 25 | Erfassung der Frequenz und/oder der Amplitude der Schwingung |
| 26 | Bestimmung des wenigstens einen Parameters |
| 27 | Auslenkung des Messaufnehmers durch das strömende Medium |
| 28 | Bestimmung der Strömungsgeschwindigkeit |
| 29 | Aktive Auslenkung des Messaufnehmers |
| 30 | Erfassung der Eigenfrequenz |
| 31 | Bestimmung der Dichte des Mediums |
| 32 | Erfassung der Amplitude der Eigenfrequenz |
| 33 | Bestimmung der Viskosität des Mediums |

**Patentansprüche**

**1.** Messgerät (1) mit einem zur Führung eines Mediums geeigneten Messrohr (3),

mit wenigstens einer Sensoreinheit (2), wobei die Sensoreinheit (2) zur Erfassung von wenigstens einem Parameter eines Mediums ausgebildet ist,
wobei die Sensoreinheit (2) zumindest teilweise in die Messrohrwand des Messrohrs (3) integriert ist, und
mit wenigstens einer Steuer- und Auswerteinheit (4),
**dadurch gekennzeichnet,**
**dass** die Sensoreinheit (2) wenigstens einen auslenkbaren Messaufnehmer (5) mit wenigstens einer Kavität (8) und wenigstens eine ortsfeste Basiseinheit (6) aufweist,
wobei der Messaufnehmer (5) über wenigstens ein Federelement (7) mit der Basiseinheit (6) verbunden ist, wobei die Basiseinheit (6) außerhalb des Messrohrinnenraums angeordnet ist,
wobei wenigstens eine Seite des Messaufnehmers (5) im Betrieb Kontakt zum Medium aufweist und wobei die Kavität (8) auf der dem Medium zugewandten Seite des Messaufnehmers (5) angeordnet ist,
und wobei der Messaufnehmer (5) derart in die Messrohrwand (3) integriert ist, dass er zumindest in der Ebene der Messrohrwandung ausgelenkt werden kann,
und
**dass** die Sensoreinheit (2) ein Mittel (9) zur Erfassung der Auslenkung des Messaufnehmers (5) aufweist.

2. Messgerät (1) nach Anspruch 1, **dadurch gekennzeichnet, dass** die Sensoreinheit (2) derart in dem Messrohr (3) angeordnet ist, dass die dem Medium zugewandte Seite des Messaufnehmers (5) im Wesentlichen plan zu der Innenwand des Messrohrs (3) angeordnet ist.

3. Messgerät (1) nach Anspruch 1 oder 2, **dadurch gekennzeichnet, dass** das Mittel (9) zur Erfassung der Auslenkung des Messaufnehmers als Piezoelement und/oder als Dehnungsmessstreifen (13) und/oder als induktiver Sensor und/oder als kapazitiver Sensor und/oder als optischer Sensor und/oder als Kraftmesser (14) ausgebildet ist.

4. Messgerät (1) nach einem der Ansprüche 1 bis 3, **dadurch gekennzeichnet, dass** das Federelement (7) als Biegefeder, insbesondere als Blattfeder (12), ausgebildet ist.

5. Messgerät (1) nach einem der Ansprüche 1 bis 4, **dadurch gekennzeichnet, dass** ein Mittel (16) zur aktiven Auslenkung des Messaufnehmers (5) vorhanden ist.

6. Messgerät (1) nach Anspruch 5, **dadurch gekennzeichnet, dass** das Mittel (16) zur aktiven Auslenkung als Elektromagnet (17) und/oder als Piezoelement ausgebildet ist.

7. Messgerät (1) nach einem der Ansprüche 1 bis 6, **dadurch gekennzeichnet, dass** die Ausdehnung L der Kavität (8) in einer möglichen Strömungsrichtung des Mediums größer ist als die Tiefe T der Kavität (8).

8. Messgerät (1) nach einem der Ansprüche 1 bis 7, **dadurch gekennzeichnet, dass** der auslenkbare Messaufnehmer (5) über ein weiteres Federelement (7) mit einer Masseeinheit (22) verbunden ist, sodass die Kombination aus dem Messaufnehmer (5) und der Masseeinheit (22) ein gekoppeltes Feder-Masse-System bildet.

9. Sensoreinheit (2) zur Bestimmung wenigstens eines Parameters eines Mediums, zum Einbau in die Messrohrwand eines Messrohres (3), in einem Messgerät nach Anspruch 1, wobei das Messrohr von dem Medium durchströmt wird, **dadurch gekennzeichnet,**

**dass** die Sensoreinheit (2) wenigstens einen auslenkbaren Messaufnehmer (5) mit wenigstens einer Kavität (8) und wenigstens eine fixierbare Basiseinheit (6), die im montierten Zustand ortsfest angeordnet ist, aufweist,
wobei der Messaufnehmer (5) über wenigstens ein Federelement (7) mit der Basiseinheit (6) verbunden ist
wobei wenigstens eine Seite des Messaufnehmers (5) im Betrieb Kontakt zum Medium aufweist und wobei die Kavität (8) auf der dem Medium zugewandten Seite des Messaufnehmers (5) angeordnet ist,
und
**dass** die Sensoreinheit (2) ein Mittel (9) zur Erfassung der Auslenkung des Messaufnehmers (5) aufweist.

10. Sensoreinheit (2) nach Anspruch 9, **dadurch gekennzeichnet, dass** die Sensoreinheit (2) gemäß einem der Ansprüche 3 bis 8, soweit diese Ansprüche die Sensoreinheit betreffen, ausgebildet ist.

11. Verfahren (23) zur Bestimmung wenigstens eines Parameters eines Mediums mittels eines Messgeräts (1),

wobei das Messgerät (1) ein zur Führung des Mediums geeignetes Messrohr (3), wenigstens einer Steuer- und Auswerteinheit (4) und wenigstens eine Sensoreinheit (2) aufweist, wobei die Sensoreinheit (2) zur Erfassung des wenigstens einen Parameters des Mediums ausgebildet ist, wobei die Sensoreinheit (2) zumindest teilweise in die Messrohrwand des Messrohrs (3) integriert ist,

**dadurch gekennzeichnet,**

**dass** die Sensoreinheit (2) wenigstens einen auslenkbaren Messaufnehmer (5) mit wenigstens einer Kavität (8) und wenigstens eine ortsfeste Basiseinheit (6) aufweist,

wobei der Messaufnehmer (5) über wenigstens ein Federelement (7) mit der Basiseinheit (6) verbunden ist, wobei die Basiseinheit (6) außerhalb des Messrohrinnenraums angeordnet ist, wobei wenigstens eine Seite des Messaufnehmers (5) Kontakt zum Medium aufweist und wobei die Kavität (8) auf der dem Medium zugewandten Seite des Messaufnehmers (5) angeordnet ist, wobei der Messaufnehmer (5) derart in die Messrohrwand (3) integriert ist, dass er zumindest in der Ebene der Messrohrwandung ausgelenkt werden kann,

**dass** die Sensoreinheit (2) ein Mittel (9) zur Erfassung der Auslenkung des Messaufnehmers (5) aufweist. ,

und **dass** das Verfahren (23) die folgenden Schritte umfasst:

- Anregung (24) des Messaufnehmers (5) zur Schwingung in der Ebene der Messrohrwandung,
- Erfassung (25) der Frequenz und/oder der Amplitude der Schwingung durch das Mittel (9) zur Erfassung der Auslenkung,
- Bestimmung (26) des wenigstens einen Parameters aus der gemessenen Frequenz und/oder der Amplitude durch die Steuer- und Auswerteeinheit (4).

12. Verfahren (23) nach Anspruch 11, **dadurch gekennzeichnet, dass** die Anregung des Messaufnehmers (5) zur Schwingung durch das strömende Medium erfolgt (27) und dass aus der Frequenz der Schwingung des Messaufnehmers (5) die Strömungsgeschwindigkeit des Mediums bestimmt wird (28).

13. Verfahren (23) nach einem der Ansprüche 11 oder 12, **dadurch gekennzeichnet dass** ein Mittel (16) zur aktiven Auslenkung des Messaufnehmers (5) vorhanden ist und dass die Anregung des Messaufnehmers (5), alternativ oder zusätzlich zu der Anregung durch das strömende Medium, durch das Mittel (16) zur aktiven Auslenkung erfolgt (29).

14. Verfahren (23) nach Anspruch 13, **dadurch gekennzeichnet, dass** aus der Frequenz der Eigenschwingung des Messaufnehmers (5) die Dichte des strömenden Mediums bestimmt wird (31) und/oder dass aus der Dämpfung der Schwingung des Messaufnehmers (5) die Viskosität des Mediums bestimmt wird (33).

15. Verfahren (23) nach einem der Ansprüche 11 bis 14, **dadurch gekennzeichnet, dass** der auslenkbare Messaufnehmer (5) über ein weiteres Federelement (7) mit einer Masseeinheit (22) verbunden ist, sodass die Kombination aus dem Messaufnehmer (5) und der Masseeinheit (22) ein gekoppeltes Feder-Masse-System bildet, wobei das gekoppelte Feder-Masse-System zur Schwingung angeregt wird, wobei die Änderung der Masse des Messaufnehmers durch die Aufnahme des Mediums eine Störung der Resonanz bewirkt, sodass aus der Amplitude der Differenz zwischen der Schwingung des Messaufnehmers (5) und der Schwingung der Masseeinheit (22) die Dichte des strömenden Mediums bestimmt wird.

## Claims

1. Measuring device (1) with a measuring tube (3) suitable for guiding a medium,

   having at least one sensor unit (2), wherein the sensor unit (2) is designed for capturing at least one parameter of a medium, wherein the sensor unit (2) is at least partially integrated in the measuring tube wall of the measuring tube (3), and with at least one control and evaluation unit (4), **characterized in**

   **that** the sensor unit (2) has at least one deflectable measuring sensor (5) with at least one cavity (8) and at least one stationary base unit (6), wherein the measuring sensor (5) is connected to the base unit (6) via at least one spring element (7), wherein the base unit (6) is arranged outside the interior of the measuring tube, wherein at least one side of the measuring sensor (5) is in contact with the medium during operation, and wherein the cavity (8) is arranged on the side of the measuring sensor (5) facing the medium,

   and wherein the measuring sensor (5) is integrated into the measuring tube wall (3) in such a way that it can be deflected at least in the plane of the measuring tube wall,

   and

   **that** the sensor unit (2) has a means (9) for capturing the deflection of the measuring sensor (5).

2. Measuring device (1) according to claim 1, **characterized in that** the sensor unit (2) is arranged in the measuring tube (3) in such a way that the side of the measuring sensor (5) facing the medium is arranged essentially planar to the inner wall of the measuring tube (3).

3. Measuring device (1) according to claim 1 or 2, **characterized in that** the means (9) for capturing the deflection of the measuring sensor is designed as a piezoelectric element and/or as a strain gauge (13) and/or as an inductive sensor and/or as a capacitive sensor and/or as an optical sensor and/or as a force gauge (14).

4. Measuring device (1) according to any one of claims 1 to 3, **characterized in that** the spring element (7) is designed as a bending spring, in particular as a leaf spring (12).

5. Measuring device (1) according to any one of claims 1 to 4, **characterized in that** a means (16) for active deflection of the measuring sensor (5) is provided.

6. Measuring device (1) according to claim 5, **characterized in that** the means (16) for active deflection is designed as an electromagnet (17) and/or as a piezoelectric element.

7. Measuring device (1) according to any one of the claims 1 to 6, **characterized in that** the extension L of the cavity (8) in a possible flow direction of the medium is greater than the depth T of the cavity (8).

8. Measuring device (1) according to any one of claims 1 to 7, **characterized in that** the deflectable measuring sensor (5) is connected to a mass unit (22) via a further spring element (7), so that the combination of the measuring sensor (5) and the mass unit (22) forms a coupled spring-mass system.

9. Sensor unit (2) for determining at least one parameter of a medium, for installation in the measuring tube wall of a measuring tube (3) in a measuring device according to claim 1, wherein medium flows through the measuring tube (3),
   **characterized in**

   **that** the sensor unit (2) has at least one deflectable measuring sensor (5) with at least one cavity (8) and at least one fixable base unit (6), which is arranged at a fixed location in the mounted state,
   wherein the sensor (5) is connected to the base unit (6) via at least one spring element (7)
   wherein at least one side of the measuring sensor (5) is in contact with the medium during operation, and wherein the cavity (8) is arranged on the side of the measuring sensor (5) facing the medium
   and
   **that** the sensor unit (2) has a means (9) for capturing the deflection of the sensor (5).

10. Sensor unit (2) according to claim 9, **characterized in that** the sensor unit (2) is designed according to any one of claims 3 to 8, insofar as these claims deal with the sensor unit.

11. Method (23) for determining at least one parameter of a medium by means of a measuring device (1),

   wherein the measuring device (1) comprises a measuring tube (3) suitable for guiding the medium, at least one control and evaluation unit (4) and
   also comprises at least one sensor unit (2), wherein the sensor unit (2) is designed to capture the at least one parameter of the medium, wherein the sensor unit (2) is at least partially integrated into the measuring tube wall of the measuring tube (3)
   **characterized in**
   **that** the sensor unit (2) has at least one deflectable measuring sensor (5) with at least one cavity (8) and at least one stationary base unit (6), wherein the measuring sensor (5) is connected to the base unit (6) via at least one spring element (7), wherein the base unit (6) is arranged outside the interior of the measuring tube, wherein at least one side of the sensor unit (5) is in contact with the medium, and wherein the cavity (8) is arranged on the side of the sensor unit (5) facing the medium, wherein the sensor unit (5) is integrated into the measuring tube wall (3) in such a way that it can be deflected at least in the plane of the measuring tube wall,
   **that** the sensor unit (2) has a means (9) for capturing the deflection of the measuring sensor (5), and **that** the method (23) comprises the following steps:

   - exciting (24) the measuring sensor (5) to oscillation in the plane of the measuring tube wall,
   - capturing (25) the frequency and/or amplitude of the oscillation by the means (9) for detecting the deflection,
   - determining (26) the at least one parameter from the measured frequency and/or the amplitude by the control and evaluation unit (4).

12. Method (23) according to claim 11, **characterized in that** the excitation of the measuring sensor (5) to oscillation is effected (27) by the flowing medium, and that the flow velocity of the medium is determined (28) from the frequency of the oscillation of the measuring sensor (5).

13. Method (23) according to any one of claims 11 or 12, **characterized in that** a means (16) for active deflection of the measuring sensor (5) is provided and that the excitation of the measuring sensor (5), alternatively or in addition to the excitation by the flowing medium, is effected by the means (16) for active deflection (29).

14. Method (23) according to claim 13, **characterized in that** the density of the flowing medium is determined (31) from the frequency of the natural oscillation of the measuring sensor (5) and/or that the viscosity of the medium is determined (33) from the damping of the oscillation of the measuring sensor (5).

15. Method (23) according to any one of claims 11 to 14, **characterized in that** the deflectable measuring sensor (5) is connected to a mass unit (22) via a further spring element (7), so that the combination of the measuring sensor (5) and the mass unit (22) forms a coupled spring-mass system, wherein the coupled spring-mass system is excited to oscillation, wherein the change in the mass of the measuring sensor caused by the absorption of the medium causes a disturbance of the resonance, so that the density of the flowing medium is determined from the amplitude of the difference between the oscillation of the measuring sensor (5) and the oscillation of the mass unit (22).

**Revendications**

1. Appareil de mesure (1) comprenant un tube de mesure (3) adapté au guidage d'un milieu, ledit appareil de mesure comprenant

   au moins une unité de détection (2), l'unité de détection (2) étant conçue pour détecter au moins un paramètre d'un milieu, l'unité de détection (2) étant intégrée au moins partiellement dans la paroi du tube de mesure (3) et
   au moins une unité de commande et d'évaluation (4), **caractérisé en ce que**
   l'unité de détection (2) comporte au moins un capteur de mesure (5) orientable qui est pourvu d'au moins une cavité (8) et d'au moins une unité de base fixe (6),
   le capteur de mesure (5) étant relié à l'unité de base (6) par le biais d'au moins un élément à ressort (7), l'unité de base (6) étant disposée à l'extérieur de l'espace intérieur du tube de mesure,
   au moins un côté du capteur de mesure (5) étant en contact avec le milieu pendant le fonctionnement et la cavité (8) étant disposée du côté du capteur de mesure (5) qui est dirigé vers le milieu,
   et le capteur de mesure (5) étant intégré dans la paroi du tube de mesure (3) de manière orientable au moins dans le plan de la paroi du tube de mesure,
et
l'unité de détection (2) comporte un moyen (9) destiné à détecter l'orientation du capteur de mesure (5).

2. Appareil de mesure (1) selon la revendication 1, **caractérisé en ce que** l'unité de détection (2) est disposée dans le tube de mesure (3) de telle sorte que le côté du capteur de mesure (5) qui est dirigé vers le milieu soit sensiblement plan par rapport à la paroi intérieure du tube de mesure (3).

3. Appareil de mesure (1) selon la revendication 1 ou 2, **caractérisé en ce que** le moyen (9) destiné à détecter l'orientation du capteur de mesure est conçu comme un élément piézoélectrique et/ou comme une jauge de contrainte (13) et/ou comme un capteur inductif et/ou comme un capteur capacitif et/ou comme un capteur optique et/ou comme un dynamomètre (14).

4. Appareil de mesure (1) selon l'une des revendications 1 à 3, **caractérisé en ce que** l'élément à ressort (7) est conçu comme un ressort spiral, en particulier comme un ressort à lames (12).

5. Appareil de mesure (1) selon l'une des revendications 1 à 4, **caractérisé en ce qu'**un moyen (16) est prévu pour orienter activement le capteur de mesure (5).

6. Appareil de mesure (1) selon la revendication 5, **caractérisé en ce que** le moyen (16) d'orientation active est conçu comme un électroaimant (17) et/ou comme un piézo-élément.

7. Appareil de mesure (1) selon l'une des revendications 1 à 6, **caractérisé en ce que** l'étendue L de la cavité (8) dans un sens d'écoulement possible du milieu est supérieure à la profondeur T de la cavité (8).

8. Appareil de mesure (1) selon l'une des revendications 1 à 7, **caractérisé en ce que** le capteur de mesure orientable (5) est relié à une unité de masse (22) par le biais d'un autre élément à ressort (7) de sorte que la combinaison du capteur de mesure (5) et de l'unité de masse (22) forme un système ressort-masse accouplé.

9. Unité de détection (2) destinée à déterminer au moins un paramètre d'un milieu et à être incorporée dans la paroi d'un tube de mesure (3) d'un appareil de mesure selon la revendication 1, le milieu s'écoulant dans le tube de mesure,

**caractérisée en ce que**

l'unité de détection (2) comporte au moins un capteur de mesure orientable (5) pourvu d'au moins une cavité (8) et d'au moins une unité de base fixable (6) qui est disposée de manière fixe à l'état monté, le capteur de mesure (5) étant relié à l'unité de base (6) par le biais d'au moins un élément à ressort (7),

au moins un côté du capteur de mesure (5) étant en contact avec le milieu pendant le fonctionnement et la cavité (8) étant disposée du côté du capteur de mesure (5) qui est dirigé vers le milieu,

et

l'unité de détection (2) comporte un moyen (9) destiné à détecter l'orientation du capteur de mesure (5).

**10.** Unité de détection (2) selon la revendication 9, **caractérisée en ce que** l'unité de détection (2) est conçue selon l'une des revendications 3 à 8, dans la mesure où ces revendications concernent l'unité de détection.

**11.** Procédé (23) de détermination d'au moins un paramètre d'un milieu à l'aide d'un appareil de mesure (1),

l'appareil de mesure (1) comportant un tube de mesure (3) adapté au guidage du milieu, au moins une unité de commande et d'évaluation (4) et au moins une unité de détection (2), l'unité de détection (2) étant conçue pour détecter l'au moins un paramètre du milieu, l'unité de détection (2) étant intégrée au moins partiellement dans la paroi du tube de mesure (3), **caractérisé en ce que**

l'unité de détection (2) comporte au moins un capteur de mesure orientable (5) pourvu d'au moins une cavité (8) et d'au moins une unité de base fixe (6),

le capteur de mesure (5) étant relié à l'unité de base (6) par le biais d'au moins un élément à ressort (7), l'unité de base (6) étant disposée à l'extérieur de l'espace intérieur du tube de mesure,

au moins un côté du capteur de mesure (5) étant en contact avec le milieu et la cavité (8) étant disposée du côté du capteur de mesure (5) qui est dirigé vers le milieu, le capteur de mesure (5) étant intégré dans la paroi du tube de mesure (3) de manière orientable au moins dans le plan de la paroi du tube de mesure,

l'unité de capteur (2) comporte un moyen (9) de détection de l'orientation du capteur de mesure (5),

et le procédé (23) comprend les étapes suivantes :

- exciter (24) le capteur de mesure (5) pour le faire osciller dans le plan de la paroi du tube de mesure,
- détecter (25) la fréquence et/ou l'amplitude de l'oscillation par le biais du moyen (9) de détection de l'orientation,
- déterminer (26) l'au moins un paramètre à partir de la fréquence mesurée et/ou de l'amplitude mesurée par le biais de l'unité de commande et d'évaluation (4) .

**12.** Procédé (23) selon la revendication 11, **caractérisé en ce que** l'excitation du capteur de mesure (5) pour le faire osciller est réalisée par le milieu en écoulement (27) et **en ce que** la vitesse d'écoulement du milieu est déterminée (28) à partir de la fréquence de l'oscillation du capteur de mesure (5).

**13.** Procédé (23) selon l'une des revendications 11 ou 12, **caractérisé en ce qu'**un moyen (16) d'orientation active du capteur de mesure (5) est prévu et **en ce que** l'excitation du capteur de mesure (5), en alternance ou en plus de l'excitation par le milieu en écoulement, est effectuée (29) par le moyen (16) d'orientation active.

**14.** Procédé (23) selon la revendication 13, **caractérisé en ce que** la densité du milieu en écoulement est déterminée (31) à partir de la fréquence de l'oscillation propre du capteur de mesure (5) et/ou en ce que la viscosité du milieu est déterminée (33) à partir de l'amortissement de l'oscillation du capteur de mesure (5).

**15.** Procédé (23) selon l'une des revendications 11 à 14, **caractérisé en ce que** le capteur de mesure orientable (5) est relié à une unité de masse (22) par le biais d'un autre élément à ressort (7) de sorte que la combinaison du capteur de mesure (5) et de l'unité de masse (22) forme un système ressort-masse accouplé, le système ressort-masse accouplé étant excité de manière à le faire osciller, la variation de la masse du capteur de mesure due à l'absorption du milieu provoquant une perturbation de la résonance de sorte que la densité du milieu en écoulement soit déterminée à partir de l'amplitude de la différence entre l'oscillation du capteur de mesure (5) et l'oscillation de l'unité de masse (22).

Fig. 1

Fig. 2

Fig. 3

Fig. 4

Fig. 5a

Fig. 5b

Fig. 5c

Fig. 6

Fig. 7

Fig. 8

Fig. 9

## Fig. 10

## Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015122124 A1